# EUROPEAN PATENT SPECIFICATION

(11) **EP 4 377 113 B1**
(45) Date of publication and mention of the grant of the patent: **22.04.2026**
(21) Application number: 22744190.4
(22) Date of filing: 13.07.2022
(51) Int. Cl.: B60K 1/04, B62D 21/15

(54) **PROTECTING MEMBER FOR A BATTERY STRUCTURE OF AN ELECTRIC VEHICLE**
SCHUTZELEMENT FÜR EINE BATTERIESTRUKTUR EINES ELEKTROFAHRZEUGS
ÉLÉMENT DE PROTECTION POUR UNE STRUCTURE DE BATTERIE D'UN VÉHICULE ÉLECTRIQUE

(30) Priority: 28.07.2021 CH 0701092021
(43) Date of publication of application: 05.06.2024
(73) Proprietor: Mubea Carbo Tech GmbH, 5020 Salzburg (AT)
(72) Inventor: MARTIN, Paul, 5071 Wals-Siezenheim (AT); OPDENWINKEL, Jörg, 5020 Salzburg (AT); SPATZENEGGER, Herbert, 5023 Salzburg (AT)
(74) Representative: Rentsch Partner AG
(86) International application number: PCT/EP2022/069645
(87) International publication number: WO 2023/006431

(56) References cited:
- EP-A1- 3 582 989
- WO-A1-2021/185632

## Description

### FIELD OF THE INVENTION

The present invention relates to a protecting member for a battery structure for an electric vehicle including a hybrid vehicle, and a battery structure comprising such a protecting member.

### BACKGROUND OF THE INVENTION

EP3582989A1 relates to a battery structure and a protector with a wavelike top belt, a bottom belt and a core.

DE102015101096A1 was first published in July 2016 in the name of Porsche AG.

It relates to a battery carrying structure. The battery facility includes an underbody battery between a bottom plate and a floor. At least one deformation zone is foreseen to avoid unwanted damage to the underbody battery. The deformation zone comprises a plurality of deformation elements arranged above the bottom plate and below the underbody battery, such that the bottom plate can deform upwards without damaging the battery facility. The deformation elements can be hollow profiles extending in direction along the length of the vehicle.

WO2015/077000A1 was first published in May 2015 in the name of Atieva Inc. It relates to a battery pack protection system for use with an electric vehicle, in which the battery pack is mounted under the car. The system utilizes a plurality of deformable cooling conduits located between the lower surface of each of the batteries and the lower battery pack enclosure panel. A thermal insulator is interposed between the conduits and the lower enclosure panel. A layer of thermally conductive material may be included which is interposed between the cooling conduits and the thermal insulator and in contact with a lower surface of each of the cooling conduits. The cooling conduits are configured to deform and absorb impact energy when an object, such as road debris, strikes the lower surface of the lower battery pack enclosure panel. Further protection may be achieved by positioning a ballistic shield, alone or with a layer of compressible material, under the bottom surface of the battery pack. The ballistic shield may be fabricated from either a metal or high density plastic, and the layer of compressible material may be made from an open-cell or closed-cell foam of silicone or urethane and be interposed between the battery pack and the ballistic shield.

FR2977554A1 was first published in January 2013 in the name of Fior Concept. It relates to a vehicle having a frame which comprises a honeycomb shaped structure that forms a plate. A surface of an upper plate is rigidly connected to an upper surface of the plate. A surface of a bottom plate is rigidly connected to a lower surface of the plate. Resistant structures are protruded above a wheel notch and attached with the notch by a complete and rigid connection. An external resistant belt is attached to an external circumference of the plate by a complete and rigid connection and is placed partially between the structures of passages of the wheels.

The plate, upper plate and lower plate are made from light metal alloy material, e.g. based on aluminum.

The prior art protection systems for underfloor battery packs usually require relatively large deformation paths for absorbing the occurring energy. Therefore, the known protection systems require a significant amount of space between the bottom of the vehicle and the parts to be protected to fulfill the safety requirements, i.e. depletion of the introduced energy without significant introduction of forces into the parts to be protected. Depending on the type of vehicle this can have a significant impact on at least one of the following parameters: Ground clearance, access height, head clearance, vehicle height, cross-sectional area.

The battery protection systems known from the prior art are further usually made from metal or composite material and are less appropriate for absorbing high punctual impact loads, or they require an additional ballistic shield for this purpose. Their construction involves multiple parts that must be assembled together and thus add complexity to the car manufacturing process.

WO2018/149762A1 was first published in August 2018 in the name of present applicant MUBEA CARBO TECH GmbH. It relates to a battery structure having a protector with a core arranged between a wave-shaped top belt and a bottom belt.

### SUMMARY OF THE INVENTION

It is an object of the invention to provide an improved protecting member for a battery structure of an electric (including hybrid) vehicle, which is comparably lightweight, needs less space in a vertical direction (z-direction) to absorb impact energy, is easy to manufacture and easy to be mounted in the vehicle. A further aspect of the invention is directed to an improved protecting member, which is less expensive in manufacturing.

These objects are achieved by a protecting member for a battery structure e.g. of an electric (hybrid) vehicle, which comprises a top belt having a waveform in a first direction (respectively a wave-like shape), a bottom belt, and a core arranged between and interconnecting the top belt and the bottom belt. The core is at least partially made from a first core material comprising a lose network of fibers embedded in a foam. The foam of the first core material can be made of polyurethane and/or the fibers of the first core material can be glas-fibers. The fibers can further have a length of 12 mm - 100 mm, in particular 12 mm -75 mm, more particularly 12 mm - 25 mm. The core, that is at least partially made from the first core material can be a fiber injection component, in particular a long fiber injection component. During the process, the polyurethane foam and the chopped fibers are poured into an open mold. Low compression pressure is then used to create complex parts in a variety of sizes. The presence of the reinforcing fibers in the polyurethane causes an increase of stiffness, which also makes it possible to create thinner walls with overall less material. This is accompanied by a corresponding reduction in costs, even for larger and more complex parts. Thus, the protecting member according to the disclosure has various advantages over known systems. The structure provides high-performance of the mechanical properties of the core of the protecting member, which includes: good plastic or irreversible deformation and fracture behavior to absorb impact energy, e.g. when a larger object, such as a retractable bollard, strikes the lower surface of the battery structure; good intrusion protection behavior to absorb high punctual loads, e.g. when smaller objects, such as road debris, try to penetrate the protecting member. Compared to known protection systems having compressible structures or materials and ballistic shields, the protecting member of the invention has a simpler construction and is yet efficient in absorption of impact energy.

The top belt having the waveform can comprise elevations and thereto alternating depressions. A waveform in the first direction is thereby defined such that the elevations and depressions extend perpendicular to said first direction and perpendicular to the vertical direction. The waveform can be continuous (e.g. sinusoidal). However, also variations are possible, where the elevations comprise an essentially flat top deck and/or the depressions comprise an essentially flat bottom with rounded transitions between the elevations and depressions. However, also variations are possible, whereby e.g. the elevations comprise an essentially flat top deck and the depressions are formed concave.

In some embodiments the waveform can extend in two directions, if appropriate. Thus, the top belt can further have a waveform in a second direction, which overlays with the waveform in the first direction. Preferably the second direction is thereby perpendicular to the first direction and the vertical direction. Depending on the application, the first direction may be defined in a longitudinal direction (y-direction) of the protecting member, respectively the vehicle. The second direction can thus be defined in a transversal direction (x-direction) of the protecting member, respectively the vehicle. The waveform in the second direction can preferably overlay the waveform in the first direction only in the area of the elevations (e.g. in the area of the top deck of one or more elevations) of the waveform in the first direction. In that case, the top deck can feature an essentially flat surface with local elevations of the waveform in the second direction.

The waveform in the first direction and/or the second direction can be continuous and/or stepped. In case of a stepped waveform, one or more steps can form a respective elevation and/or a respective depression. A step is preferably an area essentially normal with respect to the vertical direction. A transition area may be arranged between two adjacent steps. The transition area can be sloped or extend in vertical direction. Preferably at least one intermediate step is formed between a top step (forming the top of the elevation) and a bottom step (forming the bottom of the depression). The at least one intermediate step can serve for mounting the protecting member rigidly to the battery structure. Thus, a deformation space is formed between the bottom step and the respective intermediate step. The deformation space provides a deformable zone in case of high impact events causing elastic or inelastic, i.e. damaging, deformation of the protecting member. Alternatively, (or in addition,) also the top step may serve for mounting the protecting member. In this case deformation space is formed between the bottom step and the top step (and/or the intermediate step).

The top belt (and/or the bottom belt) can comprise one or multiple layer(s) of fiber reinforced composite material. The one or multiple layer(s) of either the top belt or the bottom belt can vary in thickness (in the vertical direction). Depending on the application, top belt and/or the bottom belt can at least partially be made from a material selected from the group consisting of: glass-fiber reinforced plastic (GFK); carbon-fiber reinforced plastic (CFK); basalt-fiber reinforced polymer composites; aramid-fiber reinforced polymer composites; metal, such as sheet metal; natural-fiber reinforced polymer composites; and combinations thereof. This material choice gives very high stiffness to the top and bottom belt, which in combination with the flexibility of the core provides excellent energy absorption and damage behavior of the protection member in all types of high impact events. As an alternative or in addition, the top belt and/or the bottom belt is at least partially or completely made from a material containing natural fibers, in particular fibers selected from the group consisting of: flax, hemp, jute, ramie, kenaf, sisal, henequen, bamboo, silk, cotton, and combinations thereof.

In embodiments, the core comprises a base plate having an essential planar upper surface and an essential planar lower surface. Such a planar core further simplifies manufacturing and still provides the favorable features of a flexible core with stiffer top belt and bottom belt. Preferably, the base plate is made from the first core material.

Additionally, or alternatively, the core may comprise at least one beam. The at least one beam can be arranged in vertical direction between the base plate and the top belt. Thereby, the at least one beam can be arranged on the upper surface of the base plate, in particular glued with an adhesive, such that the core is provided with a wave-like reinforcement structure. The wave-like structure is hereby visible in the vertical cross section, i.e. in a cross sectional plane extending along the vertical direction (perpendicular to the longitudinal and transversal direction) of the protecting member or, in mounted state, of the electric vehicle. The wave-like shape of the core also serves for distancing the protecting member (in areas outside of the beams) from a lower side of the battery structure for providing deformation space, into which the protecting member can expand in case of an impact event without damaging the battery structure. The at least one beam also provides mechanical enforcement for placing fastening means, such as screws, for fastening the protecting member underneath the underfloor battery structure.

In some embodiments, the at least one beam can be made of the first core material. Alternatively, the at least one beam can be made of a second core material comprising a polymeric material, in particular polyurethane or polyethylene terephthalate. Depending on the application, the at least one beam can at least partially or completely be made from a foam material, in particular a polymeric foam material, such as e.g. polyurethane foam (PU foam), polyethylene terephthalate foam (PET foam), or other. Foam materials can be beneficial for energy absorption.

In embodiments, the core can comprise at least one intermediate layer arranged between the base plate and the at least one beam of the core. In that case the core (comprising the base plate, at least one intermediate layer and at least one beam) also provides a wave-like reinforcement structure, as explained above. The at least one intermediate layer is preferably a layer of fiber reinforced plastic. In may further be advantageously, if the at least one intermediate layer is of the same material than the top belt. In the areas adjacent to the at least one beam, the top belt and the intermediate layer (respectively the upper layer of the multiple intermediate layers) may be directly connected, e.g. glued, to each other.

In embodiments, where the core provides a wave-like structure, the waveform of the top belt has an at least partial or complete form-locking fit with the wave-like structure of the core. As an alternative, the top belt has waveform resembling the wave-like reinforcement structure of the core and supporting it at least in several joining areas. The wave-like shape of the protecting member, or at least its upper part, offers an optimized distribution of the impact energy into the protecting member by a combination of elastic and/or plastic deformation and thereby further improves its capability to absorb impact energy.

In embodiments, at least two beams are arranged parallel to one another and/or parallel to an edge of the protecting member. The protecting member can in principle have any shape or contour. For example, two or more beams can be arranged parallel to a transverse edge (extending in the transversal direction) of the protecting member, which is suitable or designed for being mounted parallel to a transverse extension of the electric vehicle. As an alternative or in addition, one or more beams can also be arranged parallel to a longitudinal edge (extending in the longitudinal direction) of the protecting member, which is suitable or designed for being mounted parallel to a length extension of the electric vehicle.

In embodiments, the at least one beam comprises several beams that form a frame, e.g. a rectangular frame, for the base plate; in particular, an open or closed frame that runs along or close to some or all edges of the base plate. In embodiments, the at least one beam is or comprises at least one cross beam that runs across the base plate under an angle relative to edges of the base plate. Embodiments also encompass arbitrary combinations of: cross beam(s), beams running in a frame-like manner, beam(s) running along or close to edge(s). The disclosed beam arrangements can provide favorable reinforcement structures to the base plate of the core.

In embodiments, a mounting hole for mounting the protecting member to the battery structure of the electric vehicle is machined through the protecting member. Preferably, the mounting hole is machined, e.g. drilled or milled, along the vertical direction of the protecting member or electric vehicle. It may be advantageous, if the mounting hole is machined through at least one beam. If no base plate is present and the core only comprises multiple beams, placing the mounting hole adjacent to the beams has however the advantage, that the core is fully enclosed and protected from environmental influences.

In embodiments, the top belt and the bottom belt are directly joined together in edge areas that laterally protrude over the core and/or in areas of mounting holes in the protecting member. The direct joining of the top belt with the bottom belt allows for rigid mounting with high force transmission of the protecting member to the battery structure, such that the deformable zone between the protecting member and the battery structure can be maintained also during high impact events. In other embodiments, the areas of the mounting holes can still contain the core with a non-vanishing local thickness and with a sleeve, e.g. metal sleeve or aluminum sleeve, being inserted for receiving the mounting means, such as a screw.

In embodiments, the top belt and the bottom belt form an elevation in those edge areas that laterally protrude over the core. This also allows to provide the distance between the protecting member and the battery structure required for the deformable zone in a simple and efficient manner.

In embodiments, the top belt and/or the bottom belt each has a thickness of less than 1.5 mm or equal to 1 mm; and/or the core has a first core thickness of less than 10 mm in the area of the base plate and a second core thickness of less than 30 mm in an area where the reinforcing beam is mounted.

In embodiments, the core has wedge-shaped edges at which the core is tapered off. This allows to homogenize the force transmission between the top and bottom belts and the core and to improve the flexural behavior of the core and thus of the protecting member as a whole.

The above disclosed protecting member is particularly suitable for protecting battery structures (in particular underfloor battery structures) in electric (including hybrid) vehicles. However, the protecting member of the invention is also suitable for other applications which are herewith also encompassed, such as lightweight structural elements for reinforcement and absorption of impact energy in automotive or aerospace applications. In a second aspect, the invention relates to a battery structure of an electric vehicle, wherein the battery structure comprises a protecting member as disclosed before.

It is to be understood that both the foregoing general description and the following detailed description present embodiments with optional features, and are intended to provide an overview or framework for understanding the nature and character of the disclosure. The accompanying drawings are included to provide a further understanding, and are incorporated into and constitute a part of this specification. The drawings illustrate various embodiments, and together with the description serve to explain the principles and operation of the concepts disclosed.

### BRIEF DESCRIPTION OF THE DRAWINGS

The herein described invention will be more fully understood from the detailed description given herein below and the accompanying drawings which should not be considered limiting to the invention described in the appended claims. The drawings are showing in:
- Fig. 1: A protecting member according to the invention in a perspective and exploded view;
- Fig. 2: The protecting member according to Figure 1 in a mounted state in a perspective view;
- Fig. 3: A schematic view in a cross sectional plane extending along the vertical direction of a first variation of a protecting member according to the invention;
- Fig. 4: A schematic view in a cross sectional plane extending along the vertical direction of a second variation of a protecting member according to the invention;
- Fig. 5: A schematic view in a cross sectional plane extending along the vertical direction of a third variation of a protecting member according to the invention;
- Fig. 6: A schematic view in a cross sectional plane extending along the vertical direction of a fourth variation of a protecting member according to the invention.

### DESCRIPTION OF THE EMBODIMENTS

Reference will now be made in detail to certain embodiments, examples of which are illustrated in the accompanying drawings, in which some, but not all features are shown. Indeed, embodiments disclosed herein may be embodied in many different forms and should not be construed as being limited to the embodiments set forth herein; rather, these embodiments are provided so that this disclosure will satisfy applicable legal requirements. Whenever possible, like reference numbers will be used to refer to like components or parts.

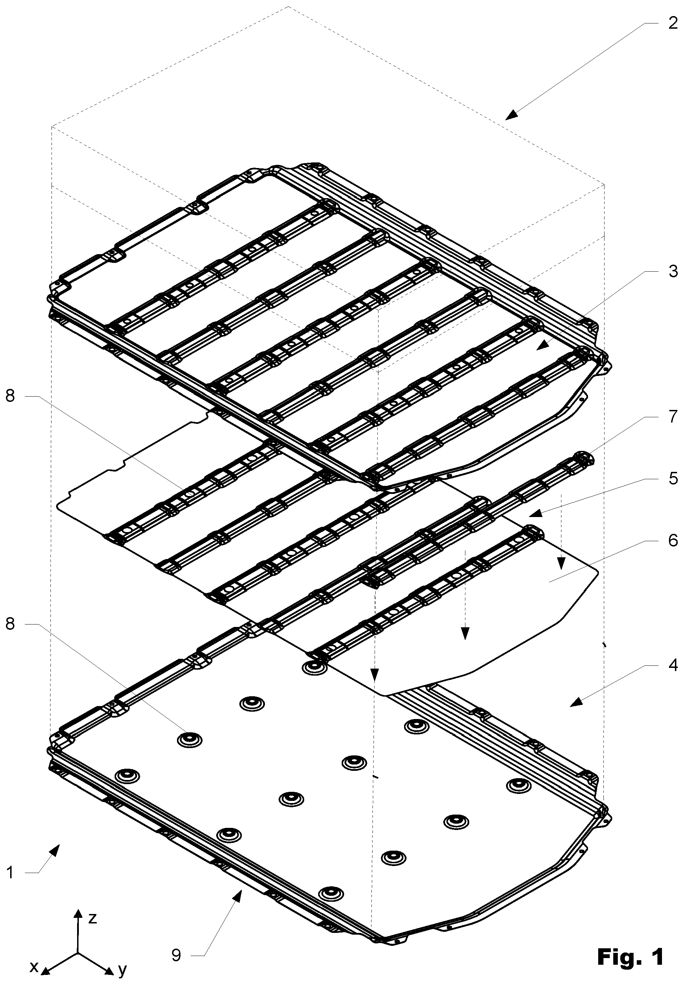

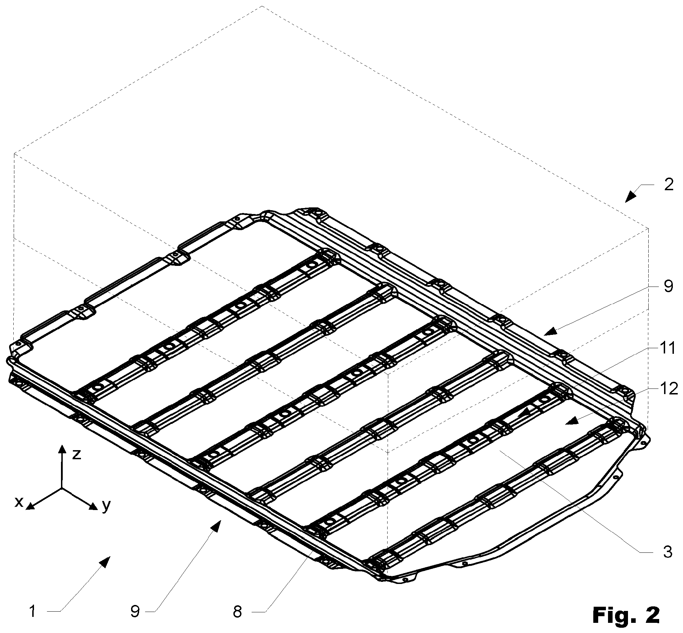

**Figure 1** and **Figure 2** show a variation of a protecting member 1 according to the invention, which is suitable for protecting a battery structure 2 of an electric vehicle. **Figure 1** is a perspective and exploded view meanwhile **Figure 2** show a mounted state of the protecting member 1. The protecting member 1 has longitudinal edges in y-direction and transverse edges in x-direction. In the mounted state of the protecting member 1, the y-direction corresponds to a length extension and the x-direction to a transverse extension of the electric vehicle. The edges areas 9 are equipped with mounting structures and also wing-shaped edges for mounting the protecting member 1 to the battery structure or to the underbody of the electric vehicle. As shown, the protecting member 1 has a wave-like shape or at least wave-like upper part. This improves the dissipation of impact energy by combined elastic and/or plastic deformation.

As can be seen in **Figure 1****,** a core 5 is sandwiched between and preferably firmly joined with a top belt 3 having a waveform in the first direction and an essentially flat bottom belt 4. The top belt 3 thus features several alternating elevations 11 and depressions 12. The core 5 includes a base plate 6, which is largely planar, and at least one beam 7, which is largely elongated. In the shown variation multiple beams 7 are present, which are arranged parallel to each other and parallel to an edge of the protecting member 1. In the region of at least one the beams 7, a mounting hole 8 is machined, e.g. drilled, through the protecting member 1. In the region of the mounting hole 8 the core thickness is preferably reduced to zero and the top belt 3 and the bottom belt 4 are directly joined together. This allows to mount the protecting member 1 rigidly to the battery structure 2. Furthermore, the top belt 3 and the bottom belt 4 may directly be joined together in edge areas 9 that laterally protrude over the core 5. Thereby, the top belt 3 and the bottom belt 4 can form an elevation in edge areas 9 that laterally protrude over the core 5, respectively the beams 7. The beams 7 also provide the wave-like shape of the protecting member 1 and the required distance between the protecting member 1 and the battery structure 2 for creating the deformation space or deformable zone in case of high impact events causing elastic or inelastic, i.e. damaging, deformation of the protecting member 1.

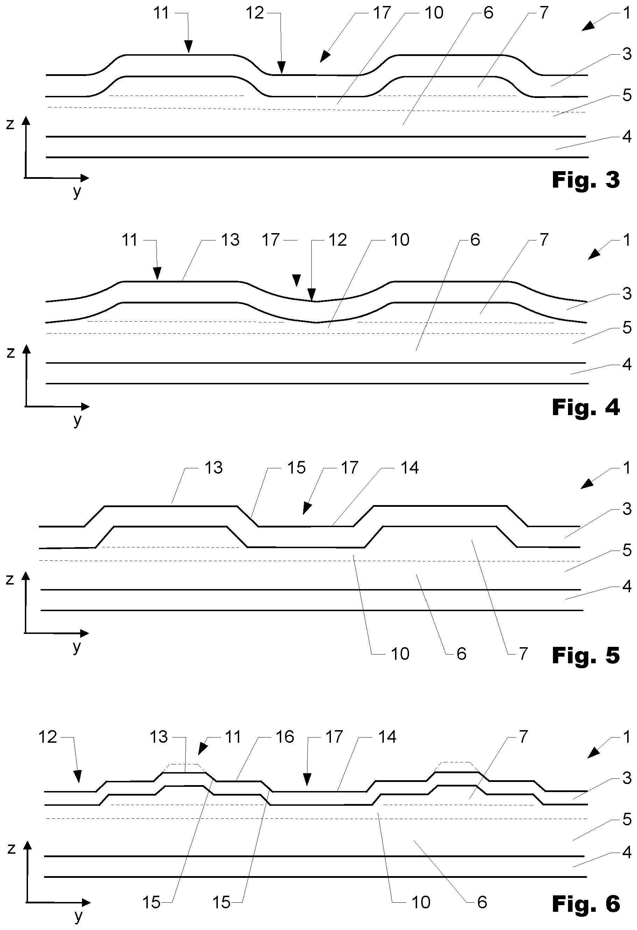

**Figure 3 to Figure 7** schematically show several possible setups of the protecting member 1 in a cross sectional plane extending along the vertical direction (z-direction). In the first variation, illustrated in **Figure 3****,** the core 5 is arranged between and interconnecting the top belt 3 and the bottom belt 4. As can be seen, the top belt 3 has a waveform in the first direction (y-direction), wherein the bottom belt 4 is essentially flat. The core is also shaped as a wave-like reinforcement structure. The waveform of the top belt 3 thus has a form-locking fit with the wave-like reinforcement structure of the core 5. The top belt 3 and/or the bottom belt 4 may comprise at least one layer of fiber reinforced plastic. The core 5 can comprise a base plate 6 and at least one beam 7 arranged between the base plate 6 and the top belt 3. The base plate 6 has thereby an essential planar upper surface and an essential planar lower surface. The base plate 6 and the at least one beam 7 can be formed integral or may be separate parts interconnected to each other by e.g. a glue. The base plate 6 is preferably made from a first core material comprising a lose network of fibers embedded in a foam. The foam can be a polyurethan and/or the fibers can be glas fibers. The at least one beam 7 can also be made from the first material or from a second material comprising a polymeric material, in particular polyurethane (PU) or polyethylene terephthalate (PET). If the base plate 6 as well as the at least one beam 7 are made from the first material the core can be an (integral) fiber injection component, in particular a long fiber injection component. If the base plate 6 and the at least one beam 7 are separate from each other, the core 5 can optionally further comprise at least one intermediate layer 10 arranged between the base plate 6 and the at least one beam 7. The intermediate layer 10 can be of the same or a different material than the top belt 3. Thus, the at least one intermediate layer 10 can be a fiber reinforced plastic.

A second variation, illustrated in **Figure 4****,** differs from the first variation in the shape of the top belt 3 and respectively the core 5. As in the first variation, also the top belt 3 of the second variation features several alternating elevations 11 and depressions 12. In the shown variation, the elevations 11 comprise an essentially flat top deck 13 and the depressions 12, arranged between two top decks 13 (of different elevations 11) are formed concave. The core 5 may also be shaped as a wave- like reinforcement structure with a top deck and concave depressions in order to provide a form-locking fit with top belt 3.

A third variation, illustrated in **Figure 5****,** differs from the first and the second variation in that the waveform of the top belt 3 (and the core 5) is stepped. In the third variation, the top belt 3 comprises a top step 13 forming the elevation 11, a bottom step 14 forming the depression 12 with one transition area 15 arranged between. However, also more steps are possible, as illustrated in the fourth variation in **Figure 6****.** There, the top belt 3 comprises a top step 13, a bottom step 14 and at least one intermediate step 16. The at least one intermediate step 16 preferably serves for mounting the protecting member 1 rigidly to the battery structure 2. Thus, the space below the intermediate step 16 and above the bottom step provides a deformation space 17 in case of high impact events causing elastic or inelastic, i.e. damaging, deformation of the protecting member 1.

A further possible variation is shown in **Figure 6****.** Depending on the application, the top belt 3 can further have a waveform in a second direction (x-direction), perpendicular to the first direction, which overlays with the waveform in the first direction. In the shown case, the waveform in the second direction overlays the waveform in the first direction only in the area of the top step 13 of the elevation 11, as indicated by the dotted line. The waveform in the second direction can be either continuous or stepped.

The waveform in the second direction can also be used for the other variations, shown in **Figure 3 to 5****.** In case of the second variation of **Figure 4****,** the top deck can then feature an essentially flat surface with local elevations of the waveform in the second direction. As in the first variation, also in the other variations, shown in **Fig-ure 4 to 6**, the core 5 may comprise either a base plate 6, an intermediate layer 10 and at least one beam 7 or just a base plate 6 and at least one beam 7. If no intermediate layer 10 is used, the base plate 6 and the at least one beam 7 can be integral.

### LIST OF DESIGNATIONS

| | | | |
|---|---|---|---|
| 1 | Protecting member | 10 | Intermediate layer |
| 2 | Battery structure | 11 | Elevation |
| 3 | Top belt | 12 | Depression |
| 4 | Bottom belt | 13 | Top step / Top deck |
| 5 | Core | 14 | Bottom step |
| 6 | Base plate | 15 | Transition area |
| 7 | Beam | 16 | Intermediate step |
| 8 | Mounting hole | 17 | Deformation space |
| 9 | Edge area | | |

## Claims

1. Protecting member (1) for a battery structure (2) of an electric vehicle, the protecting member (1) comprising
a. a top belt (3) having a waveform in the first direction,
b. a bottom belt (4), and
c. a core (5) arranged between and interconnecting the top belt (3) and the bottom belt (4), **characterized in that**:
the core (5) is at least partially made from a first core material comprising a lose network of fibers embedded in a foam.

2. Protecting member (1) according to claim 1, **wherein** the top belt (3) comprises elevations (11) and thereto alternating depressions (12).

3. Protecting member (1) according to any one of the preceding claims, **wherein** the top belt (3) further has a waveform in a second direction, perpendicular to the first direction, which overlays with the waveform in the first direction.

4. Protecting member (1) according to claim 2 and 3, **wherein** the waveform in the second direction overlays the waveform in the first direction only in the area of the elevations (11) of the top belt (3).

5. Protecting member (1) according to claim 3 or 4, **wherein** top belt (3) has a stepped waveform in the first direction and/or the second direction.

6. Protecting member (1) according to any one of the preceding claims, **wherein** the foam of the first core material is made of polyurethane and/or the fibers are glas fibers.

7. Protecting member (1) according to any one of the preceding claims, **wherein** the core is a fiber injection component, in particular a long fiber injection component.

8. Protecting member (1) according to any one of the preceding claims, **wherein** the core (5) comprises a base plate (6) having an essential planar upper surface and an essential planar lower surface.

9. Protecting member (1) according to claim 8, **wherein** the base plate (6) is made from the first core material.

10. Protecting member (1) according to claim 8 or 9, **wherein** the core (5) further comprises at least one beam (7) arranged between the base plate (6) and the top belt (3), such that the core (5) is provided with a wave-like reinforcement structure.

11. Protecting member (1) according to claim 10, **wherein** the top belt (3) having the waveform has a form-locking fit with the wave-like reinforcement structure of the core (5).

12. Protecting member (1) according to any one of the preceding claims 10 to 11, **wherein** the at least one beam (7) is made of the first core material or a second core material comprising a polymeric material, in particular polyurethane (PU) or polyethylene terephthalate (PET).

13. Protecting member (1) according to any one of the preceding claims 10 to 12, **wherein** the core (5) comprises at least one intermediate layer of fiber reinforced plastic arranged between the base plate (6) and the at least one beam (7).

14. Protecting member (1) according to any one of the preceding claims 10 to 13, **wherein** at least two beams (7) are arranged parallel to one another and/or parallel to an edge (9) of the protecting member (1).

15. Protecting member (1) according to any one of the preceding claims 10 to 14, **wherein** a mounting hole (8) for mounting the protecting member (1) to the battery structure (2) of the electric vehicle is machined through at least one beam (7).

16. Protecting member (1) according to any one of the preceding claims, wherein the top belt (3) and/or the bottom belt (4) is at least partially made from a material selected from the group consisting of: glass-fiber reinforced plastic (GFK); carbon-fiber reinforced plastic (CFK); basalt-fiber reinforced polymer composites; aramid-fiber reinforced polymer composites; metal, such as sheet metal; natural-fiber reinforced polymer composites; and combinations thereof.

17. Protecting member (1) according to any one of the preceding claims, **wherein** the top belt (3) and the bottom belt (4) are directly joined together in edge areas (9) that laterally protrude over the core (5) and/or in areas of mounting holes (8) in the protecting member (1).

18. Protecting member (1) according to any one of the preceding claims, **wherein** the top belt (3) and the bottom belt (4) form an elevation (11) in edge areas (9) that laterally protrude over the core (5).

19. Battery structure (2) of an electric vehicle, the battery structure (2) comprising a protecting member (1) according to any one of the preceding claims.

## Patentansprüche

1. Schutzelement (1) für eine Batteriestruktur (2) eines Elektrofahrzeugs, das Schutzelement (1) umfassend
a. einen Obergurt (3) mit einer Wellenform in der ersten Richtung,
b. einen Untergurt (4) und
c. einen Kern (5), der zwischen dem Obergurt (3) und dem Untergurt (4) angeordnet ist und diese miteinander wirkverbindet, **dadurch gekennzeichnet, dass**
der Kern (5) zumindest teilweise aus einem ersten Kernmaterial ausgebildet ist, das ein loses Netzwerk aus Fasern umfasst, die in einen Schaumstoff eingebettet sind.

2. Schutzelement (1) gemäss Anspruch 1, **wobei** der Obergurt (3) Erhebungen (11) und dazu abwechselnd Vertiefungen (12) umfasst.

3. Schutzelement (1) gemäss einem der vorangehenden Ansprüche, **wobei** der Obergurt (3) ferner eine Wellenform in einer zweiten Richtung, senkrecht zur ersten Richtung, aufweist, die sich mit der Wellenform in der ersten Richtung überlagert.

4. Schutzelement (1) gemäss Anspruch 2 und 3, **wobei** die Wellenform in der zweiten Richtung die Wellenform in der ersten Richtung nur im Bereich der Erhebungen (11) des Obergurts (3) überlagert.

5. Schutzelement (1) gemäss Anspruch 3 oder 4, **wobei** der Obergurt (3) eine abgestufte Wellenform in der ersten Richtung und/oder der zweiten Richtung aufweist.

6. Schutzelement (1) gemäss einem der vorangehenden Ansprüche, **wobei** der Schaumstoff des ersten Kernmaterials aus Polyurethan ausgebildet ist und/oder die Fasern Glasfasern sind.

7. Schutzelement (1) gemäss einem der vorangehenden Ansprüche, **wobei** der Kern ein Faserspritzgussteil, insbesondere ein Langfaserspritzgussteil, ist.

8. Schutzelement (1) gemäss einem der vorangehenden Ansprüche, **wobei** der Kern (5) eine Grundplatte (6) mit einer im Wesentlichen ebenen oberen Oberfläche und einer im Wesentlichen ebenen unteren Oberfläche umfasst.

9. Schutzelement (1) gemäss Anspruch 8, **wobei** die Grundplatte (6) aus dem ersten Kernmaterial hergestellt ist.

10. Schutzelement (1) gemäss Anspruch 8 oder 9, **wobei** der Kern (5) ferner mindestens einen zwischen der Grundplatte (6) und dem Obergurt (3) angeordneten Balken (7) umfasst, so dass der Kern (5) mit einer wellenförmigen Verstärkungsstruktur versehen ist.

11. Schutzelement (1) gemäss Anspruch 10, **wobei** der wellenförmige Obergurt (3) formschlüssig mit der wellenförmigen Verstärkungsstruktur des Kerns (5) verbunden ist.

12. Schutzelement (1) gemäss einem der vorangehenden Ansprüche 10 bis 11, **wobei** der mindestens eine Balken (7) aus dem ersten Kernmaterial oder einem zweiten Kernmaterial umfassend ein Polymermaterial, insbesondere Polyurethan (PU) oder Polyethylenterephthalat (PET) ausgebildet ist.

13. Schutzelement (1) gemäss einem der vorangehenden Ansprüche 10 bis 12, **wobei** der Kern (5) mindestens eine zwischen der Grundplatte (6) und dem mindestens einen Balken (7) angeordnete Zwischenschicht aus faserverstärktem Kunststoff umfasst.

14. Schutzelement (1) gemäss einem der vorangehenden Ansprüche 10 bis 13, **wobei** mindestens zwei Balken (7) parallel zueinander und/oder parallel zu einer Kante (9) des Schutzelements (1) angeordnet sind.

15. Schutzelement (1) gemäss einem der vorangehenden Ansprüche 10 bis 14, **wobei** eine Montagebohrung (8) zur Montage des Schutzelements (1) an einer Batteriestruktur (2) des Elektrofahrzeugs durch mindestens einen Balken (7) hindurchgearbeitet ist.

16. Schutzelement (1) gemäss einem der vorangehenden Ansprüche, wobei der Obergurt (3) und/oder der Untergurt (4) zumindest teilweise aus einem Material hergestellt ist, das aus der Gruppe ausgewählt ist, die besteht aus: glasfaserverstärktem Kunststoff (GFK); kohlenstofffaserverstärktem Kunststoff (CFK); basaltfaserverstärkte Polymerverbundwerkstoffe; aramidfaserverstärkte Polymerverbundwerkstoffe; Metall, wie etwa Blech; naturfaserverstärkte Polymerverbundwerkstoffe; und Kombinationen davon.

17. Schutzelement (1) gemäss einem der vorangehenden Ansprüche, **wobei** der Obergurt (3) und der Untergurt (4) in Randbereichen (9), die seitlich über den Kern (5) hinausragen, und/oder in Bereichen der Montagebohrungen (8) im Schutzelement (1) direkt miteinander verbunden sind.

18. Schutzelement (1) gemäss einem der vorangehenden Ansprüche, **wobei** der Obergurt (3) und der Untergurt (4) in Randbereichen (9), die seitlich über den Kern (5) hinausragen, eine Erhebung (11) bilden.

19. Batteriestruktur (2) eines Elektrofahrzeugs, wobei die Batteriestruktur (2) ein Schutzelement (1) gemäss einem der vorangehenden Ansprüche umfasst.

## Revendications

1. Élément de protection (1) pour une structure de batterie (2) d'un véhicule électrique, l'élément de protection (1) comprenant
a. une bande supérieure (3) ayant un profil ondulé dans la première direction,
b. une bande inférieure (4), et
c. un noyau (5) disposé entre la bande supérieure (3) et la bande inférieure (4) et les reliant entre elles, **caractérisé en ce que** :
le noyau (5) est au moins partiellement constitué d'un premier matériau de noyau comprenant un réseau lâche de fibres noyées dans une mousse.

2. Élément de protection (1) selon la revendication 1, **dans lequel** la bande supérieure (3) comprend des saillies (1 1) et des creux (12) alternés.

3. Élément de protection (1) selon l'une quelconque des revendications précédentes, **dans lequel** la bande supérieure (3) présente en outre un profil ondulé dans une deuxième direction, perpendiculaire à la première direction, qui se superpose au profil ondulé dans la première direction.

4. Élément de protection (1) selon les revendications 2 et 3, **dans lequel le** profil ondulé dans la deuxième direction recouvre le profil ondulé dans la première direction uniquement dans la zone des saillies (11) de la bande supérieure (3).

5. Élément de protection (1) selon la revendication 3 ou 4, **dans lequel** la bande supérieure (3) présente un profil ondulé en escalier dans la première direction et/ou la deuxième direction.

6. Élément de protection (1) selon l'une quelconque des revendications précédentes, **dans lequel** la mousse du premier matériau de noyau est en polyuréthane et/ou les fibres sont des fibres de verre.

7. Élément de protection (1) selon l'une quelconque des revendications précédentes, **dans lequel** le noyau est un composant injecté de fibres, en particulier un composant injecté de fibres longues.

8. Élément de protection (1) selon l'une quelconque des revendications précédentes, **dans lequel** le noyau (5) comprend une plaque de base (6) ayant une surface supérieure essentiellement plane et une surface inférieure essentiellement plane.

9. Élément de protection (1) selon la revendication 8, **dans lequel** la plaque de base (6) est fabriquée à partir du premier matériau de noyau.

10. Élément de protection (1) selon la revendication 8 ou 9, dans lequel le noyau (5) comprend en outre au moins une poutre (7) disposée entre la plaque de base (6) et la bande supérieure (3), de telle sorte que le noyau (5) est pourvu d'une structure de renforcement ondulée.

11. Élément de protection (1) selon la revendication 10, **dans lequel** la bande supérieure (3) ayant le profil ondulé présente une liaison par complémentarité de forme avec la structure de renforcement ondulée du noyau (5).

12. Élément de protection (1) selon l'une quelconque des revendications 10 à 11 précédentes, **dans lequel** la au moins une poutre (7) est réalisée dans le premier matériau de noyau ou dans un deuxième matériau de noyau comprenant un matériau polymère, en particulier du polyuréthane (PU) ou du polyéthylène téréphtalate (PET).

13. Élément de protection (1) selon l'une quelconque des revendications 10 à 12 précédentes, **dans lequel** le noyau (5) comprend au moins une couche intermédiaire en plastique renforcé de fibres disposée entre la plaque de base (6) et la au moins une poutre (7).

14. Élément de protection (1) selon l'une quelconque des revendications 10 à 13 précédentes, **dans lequel** au moins deux poutres (7) sont disposées parallèlement l'une à l'autre et/ou parallèlement à un bord (9) de l'élément de protection (1).

15. Élément de protection (1) selon l'une quelconque des revendications 10 à 14 précédentes, **dans lequel** un trou de montage (8) destiné à monter l'élément de protection (1) sur la structure de batterie (2) du véhicule électrique est usiné à travers au moins une poutre (7).

16. Élément de protection (1) selon l'une quelconque des revendications précédentes, dans lequel la bande supérieure (3) et/ou la bande inférieure (4) est au moins partiellement fabriquée à partir d'un matériau choisi dans le groupe constitué par : le plastique renforcé de fibres de verre (GFK) ; le plastique renforcé de fibres de carbone (CFK) ; composites polymères renforcés de fibres de basalte ; composites polymères renforcés de fibres d'aramide ; métal, tel que de la tôle ; composites polymères renforcés de fibres naturelles ; et des combinaisons de ceux-ci.

17. Élément de protection (1) selon l'une quelconque des revendications précédentes, **dans lequel** la bande supérieure (3) et la bande inférieure (4) sont directement reliées entre elles dans des zones de bordure (9) qui dépassent latéralement du noyau (5) et/ou dans des zones de trous de montage (8) dans l'élément de protection (1).

18. Élément de protection (1) selon l'une quelconque des revendications précédentes, **dans lequel** la bande supérieure (3) et la bande inférieure (4) forment une saillie (11) dans les zones de bordure (9) qui dépassent latéralement du noyau (5).

19. Structure de batterie (2) d'un véhicule électrique, la structure de batterie (2) comprenant un élément de protection (1) selon l'une quelconque des revendications précédentes.
